# EUROPEAN PATENT SPECIFICATION

(11) **EP 1 569 108 B1**
(45) Date of publication and mention of the grant of the patent: **16.07.2008**
(21) Application number: 04251093.3
(22) Date of filing: 26.02.2004
(51) Int. Cl.: G06F 12/02, G06F 21/00, G06F 9/445

(54) **Data protection for applications on a mobile electronic device**
Datensicherung für Anwendungen auf einem elektronischen Mobilgerät
Protection de données pour des applications sur un appareil electronique mobile

(43) Date of publication of application: 31.08.2005
(73) Proprietor: Research In Motion Limited, Waterloo, Ontario N2L 3W8 (CA)
(72) Inventor: Adams, Neil, Waterloo, Ontario N2K 4E4 (CA); Little, Herb, Waterloo, Ontario N2T 2V8 (CA)
(74) Representative: Rickard, David John

(56) References cited:
- WO-A-03/079196
- SHIOW-YANG WU AND H.S. CINATIT CHAO: "Event Engine for Adaptive Mobile Computing" PROCEEDINGS OF SECOND INTERNATIONAL CONFERENCE ON MOBILE DATA MANAGEMENT, 2001, pages 27-38, XP002291221

## Description

The present invention relates to data protection for applications on mobile electronic devices.

A mobile electronic device will typically include a number of applications for performing various functions on the device. These applications may store sensitive data on the memory of the device. A mobile electronic device may also include a memory cleaning mechanism through which memory on the device is periodically cleaned. However, the memory cleaning mechanism may not be aware of sensitive data stored by various applications on the device, and thus may not clean the memory of sensitive data that it would be desirable to remove from the device for data protection reasons. Protection of sensitive application data is particularly a concern in respect of software applications that are developed for the mobile electronic device by third parties other than the provider of the base operating system and/or virtual machine software used by the mobile electronic device.

It is known from applicant's own published patent specification, WO-A-03/076196 to provide a method of garbage collection for unreachable objects on a mobile electronic device rather than reachable data storage allocated to various software applications on the device. A garbage collection module is used to detect objects that are unreachable and then call on a wipe function to wipe such objects. In some embodiments, secure applications are requested to release sensitive objects and various trigger conditions may be used to trigger the garbage collection function.

Also, a publication by Shiow-yang Wu and H S Cinatit Chao entitled "Event Engine for Mobile Adaptive Computing" published in the Proceedings of Second International Conference on Mobile Data Management, MDM 2001, pages 27 to 38, LNCS 1987, Hong Kong January 2001 describes an event engine for adaptive mobile computing. Applications that are registered with the event engine receive notification upon occurrence of selected events detected by the event engine. However, the event engine is not provided for the purpose of notifying applications of an impending data cleaning event so that the applications can release storage for cleaning, and thereby protect sensitive data.

Thus, a method and system of memory management for applications that assists the memory cleaning mechanism in cleaning sensitive data associated with applications is desired.

### GENERAL

Examples of the invention include a method and system for data protection for applications that comprises registering applications with a storage cleaning mechanism so that the registered applications can receive notification of impending storage cleaning operations. Upon receiving notification of an impending cleaning operation, the registered applications can release or unreference storage so it can be cleaned of sensitive data.

One example embodiment includes a data protection method for software applications on a mobile electronic device, the device having storage for allocation to respective software applications for data storage, wherein a data storage cleaning operation can be triggered by any one of a plurality of types of predetermined trigger events. The method comprises the steps of: creating and storing a list of selected software applications operating on the mobile electronic device; waiting for the occurrence of any one of the plurality of trigger events; notifying the selected software applications of an impending storage cleaning operation upon the occurrence of one of the plurality of trigger events, comprising identifying to the selected software applications the type of trigger event that has occurred; and for each selected software application receiving the notification, determining if any storage allocated thereto is to be released for cleaning during the impending storage cleaning operation and if so releasing the storage for cleaning, at least some of the selected software applications selectively determining if any of the storage allocated thereto is to be released for cleaning in dependence on the type of trigger event identified.

The method may be such that at least some of the selected software applications may reference objects for storing data in the storage of the mobile electronic device, wherein the step of creating and storing a list includes registering the selected software applications and the step of releasing the storage for cleaning includes unreferencing at least some objects (164) referenced by the selected software applications; the method further including a step of cleaning the storage to remove data stored in any unreferenced objects.

According to another example embodiment is a mobile electronic device that comprises a microprocessor, a plurality of software applications operable on the microprocessor, and a heap memory for storing objects used by the software applications. A garbage collector module is operable on the microprocessor module for cleaning unreferenced objects in the heap memory. A memory cleaner module is operable on the microprocessor for maintaining a list of registered applications selected from the software applications, and for notifying at least some of the registered applications upon the occurrence of a trigger event. The registered applications are responsive to the memory cleaner module for unreferencing objects in the heap memory used thereby upon receiving the notification from the memory cleaner module. The memory cleaner module is arranged to notify the registered applications upon the occurrence of any one of a plurality of different types of trigger events, the notification including an identification of the type of trigger event; and at least some of the registered applications are configured for, upon receiving notification from the memory cleaner module, selectively unreferencing objects referenced thereby based on the type of trigger event.

Other aspects and features of the present invention will become apparent to those ordinarily skilled in the art upon review of the following description of specific embodiments of the invention in conjunction with the accompanying Figures.

### BRIEF DESCRIPTION OF THE DRAWINGS

Figure 1 is a block diagram showing a mobile electronic device to which example embodiments of the invention may be applied;
Figure 2 is block diagram showing a memory management system according to example embodiments of the invention;
Figure 3 is a block diagram depicting an application registration method in the memory management system of Figure 2;
Figure 4 shows block diagrams of an application notification and object cleaning method in the memory management system of Figure 2; and
Figure 5 shows a user interface screen displayed by the memory management system of Figure 2.

Like reference numerals are used throughout the Figures to denote similar elements and features.

### DESCRIPTION OF PREFERRED EMBODIMENTS

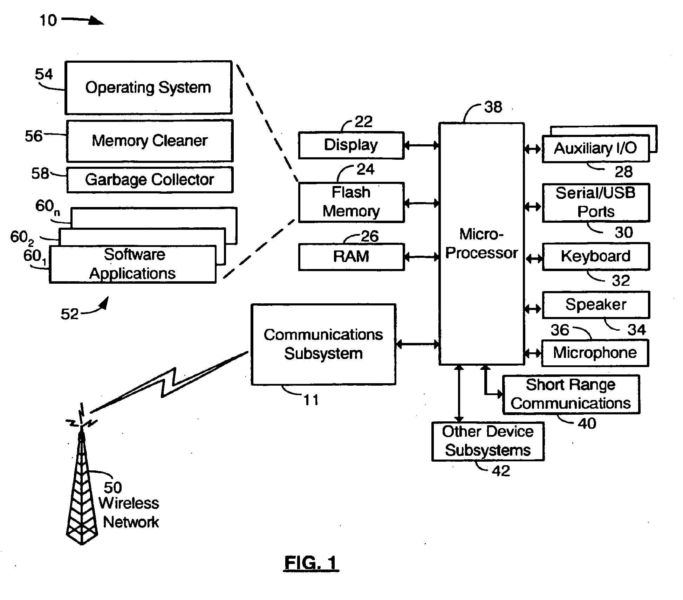

Referring now to the drawings, Figure 1 is a block diagram of a mobile electronic device 10 to which the methods and systems described herein may be applied in an example embodiment. The mobile electronic device 10 is a two-way communication device having at least data and, in some embodiments, also voice communication capabilities and/or the capability to communicate with other computer systems on the Internet. Depending on the functionality provided by the device, in various embodiments the device may be a hand-held data communication device, a multiple-mode communication device configured for both data and voice communication, a mobile telephone, a PDA (personal digital assistant) enabled for wireless communication, or a computer system with a wireless modem, among other things. In some embodiments, the systems and methods described herein could be applied to electronics devices that are not enabled for wireless communications, such as non-wireless network enabled PDAs and digital cameras for example.

The device 10 includes a communication subsystem 11 for exchanging wireless communications signals with a wireless network 50. As will be apparent to those skilled in the field of communications, the particular design of the communication subsystem 11 will be dependent upon the communication network in which the device is intended to operate. In devices that are not enabled for wireless communication, communications subsystem 11 may be omitted or inactive.

The device 10 includes a microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28, serial and/or USB port(s) 30, keyboard or keypad 32, speaker 34, microphone 36, a short-range communications subsystem 40 and any other device subsystems generally designated as 42.

Some of the subsystems shown in Fig. 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Resident on device 10 are various software modules 52, including for example operating system software 54, memory cleaner 56, garbage collector 58, and various software applications 60₁-60ₙ (individual software applications may be generically referred to as a software application 60 herein). In an example embodiment, software modules 52 are stored in a persistent store such as flash memory 24 or similar storage element. The software modules 52 or parts thereof may be temporarily loaded into a volatile store such as RAM 26. Received communication signals may also be stored to RAM 26.

The microprocessor 38, in addition to its operating system functions, preferably enables execution of software applications 60₁-60ₙ on the device. A predetermined set of applications which control basic device operations, including at least data and voice communication applications for example, will normally be installed on the device 10 during manufacture. Further applications 60, including applications provided by third party vendors other then the provider of device 10, may also be loaded onto the device 10 through the network 50, an auxiliary I/O subsystem 28, serial and/or USB port(s) 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystem 11.

Serial and/or USB port(s) 30 in Fig. 1 would normally be implemented in a personal digital assistant (PDA)-type communication device for which synchronization with a user's desktop computer (not shown) is desirable. Such a port 30 would enable a user to set preferences through an external device or software application and would extend the capabilities of the device by providing for information or software downloads to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth™ communication module to provide for communication with similarly enabled systems and devices.

Wireless mobile network 50 is, in an example embodiment, a wireless packet data network, (e.g. Mobitex™ or DataTAC™), which provides radio coverage to mobile electronic devices 10. Among other things, wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems).

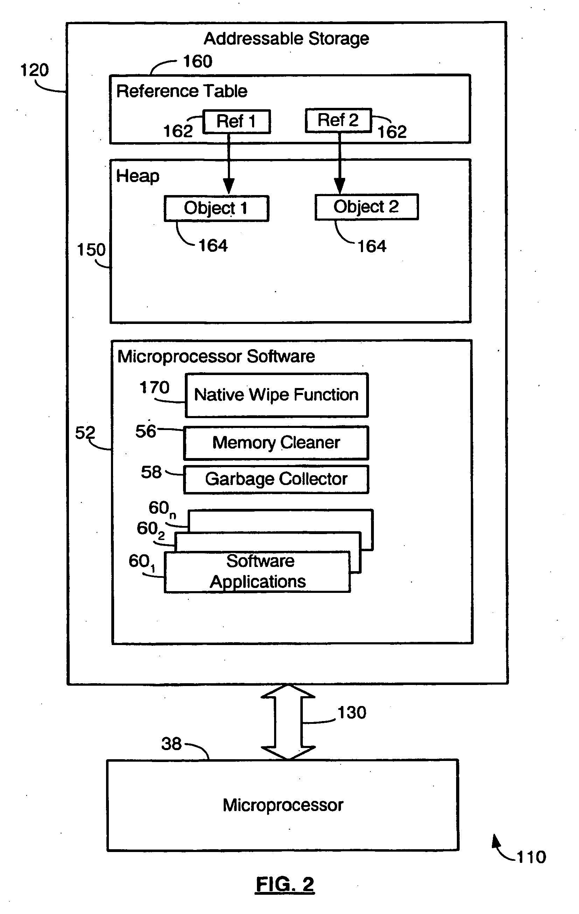

Figure 2 is a block diagram showing an example of a memory management system 110. Although memory management system 110 is illustrated and described herein in the context of mobile communications device 10, many different types of mobile electronic devices may utilize system 110, such as personal digital assistants, cellular phones, wireless two-way communication devices, as well as any device that has applications that store information.

The memory management system 110 of Fig. 2 includes microprocessor 38, and an addressable storage 120 connected to microprocessor 38 by a data bus 130. The addressable storage 120, which may include RAM 26 and persistent flash memory 24, among other things, stores software modules 52, heap 150 and reference table 160.

Software 52 includes a native wipe function 170. The native wipe function 170 can clean the data in a portion of addressable storage 120. As an example, a suitable function in the 'C' programming language is the function 'memset()', which could be used to write over data with all zeroes, all ones, or with random data to thwart sophisticated memory recovery techniques. Software 52 also includes a garbage collector software module 58 capable of using native wipe function 170, as well as being able to access objects in heap 150 via reference table 160. The software 52 also includes various software applications 60₁-60ₙ for implementing various functions on the mobile electronic device 10. By way of non-limiting examples, software applications 60₁-60ₙ may be customer relationship management applications, streaming information service applications and attachment viewers. The software 52 also includes a memory cleaner module 56 that, as will be described in greater detail below, acts as an interface between at least some of the software applications 60₁-60ₙ and the garbage collector 58. Software 52 may be used in many different implementation environments, such as object-oriented environments (e.g., Java).

In an example embodiment, software 52 includes virtual machine software modules and virtual machine software that is capable of interpreting virtual machine instructions found in the virtual machine software modules. In such an embodiment, the garbage collector 58 can be part of the virtual machine software.

When executed, software applications 60₁-60ₙ are each allocated a region of addressable storage 120 to use for storing data that is used or generated by the software application 60. More particularly, when a software application 60 is executed, one or more objects 164 for storing data associated with the software is/are allocated in heap 150. The objects 164 may be allocated in RAM 26 or flash memory 24. The objects 164 are accessible through reference table 160 (which in an example embodiment is stored in RAM 26) in that each object 164 has an associated reference entry 162 in reference table 160. Each reference entry 162 includes an address or pointer for its associated object 164. Typically, when an application 60 ceases using a particular object 164, the reference entry 162 that points to the dropped object is nulled out, thereby indicating that the memory previously used by the object has been freed up.

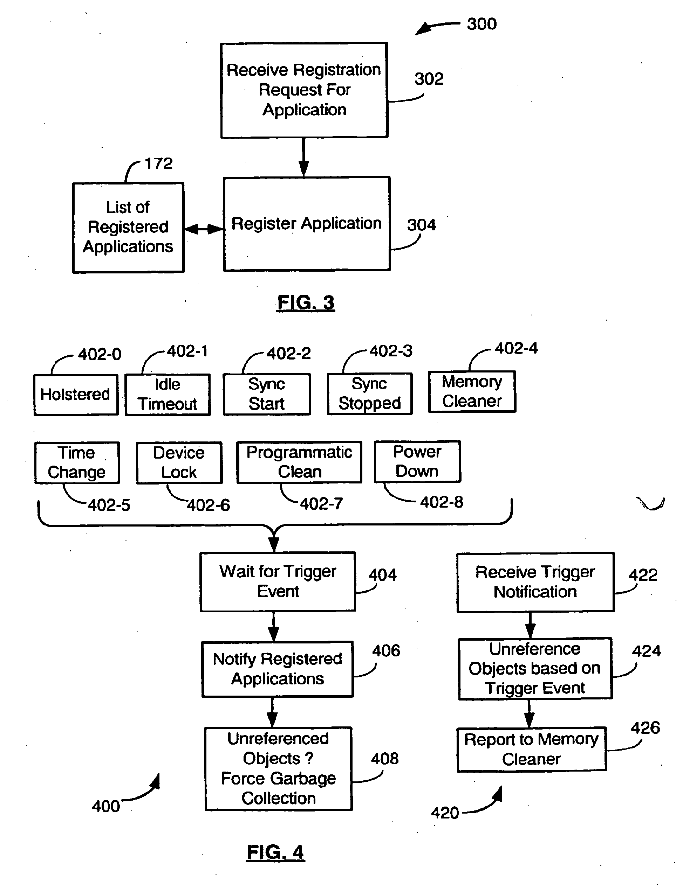

The memory cleaner module 56 provides a mechanism through which applications 60₁-60ₙ can register to be notified upon the occurrence of certain predetermined events so that they can then unreference objects in storage 120 to release storage for subsequent cleaning. Figure 3 depicts an example registration method 300 carried out by memory cleaner module 56. As indicated in step 302, a registration request is received for an application 60, and as indicated in step 304, the application is registered for notification. Registration requests may occur in one or more ways in various embodiments. For example, the memory cleaner module may allow a user of the device 10 to select from a partial or full list of applications 60₁-60ₙ those applications that notification is desired for; alternatively, an application 60 may automatically request registration for notification when it is installed on device 10, or each time that it executes, or when it creates data that is categorized according to predetermined standards as sensitive data, and in some embodiments the user may be given the option to opt out of the registration of a specific application. In step 304, the application 60 being registered for notification is stored in a list 172 of registered applications maintained by the memory cleaner module 56. The list 172 may be maintained as an object in storage 120.

Once an application is in the registered application list 172, it will be notified by the memory cleaner module 56 upon the occurrence of predetermined trigger events. Figure 4 depicts a flow diagram showing an example method 400 implemented by memory cleaner 56 for notifying registered applications and instigating cleaning of objects that are unreferenced by the applications in response to the notification. Figure 4 also depicts a flow diagram of an example method 420 carried out at individual registered applications upon receiving notification of a trigger event.

As indicated in step 404, the method 400 includes waiting for one of the predetermined trigger events. In example embodiments, trigger events can include, but are not limited to: (a) a holstered event 402-0, which occurs when the mobile electronic device 10 is placed in its associated holster (if so equipped) by the user; (b) an idle timeout event 402-1, which occurs when the mobile electronic device 10 has been left idle by the user for a user configurable time period; (c) a sync start event 402-2, which occurs when a synchronization operation between a desktop computer and the mobile electronic device 10 has begun; (d) a sync stop event 402-3, which occurs when a synchronization operation between the desktop computer and the mobile electronic device 10 has ended; (e) a memory cleaner event 402-4, which occurs when the memory cleaner module 56 itself initiates the notification and cleaning method 400 - for example, the memory cleaner module 56 may be configured to initiate method 400 periodically at user configured time intervals; (f) a time change event 402-5, which occurs when the mobile electronic device changes time-zones or the user changes the time on the mobile electronic device; (g) a device lock event 402-6, which occurs when the mobile electronic device has been locked, which may occur due to a number of reasons, such as the user expressly locking the mobile electronic device, or a delay beyond a timeout period in entering a required password; (h) a programmatic clean event 402-7, which occurs when a programmatic clean has been initiated - for example, by calling of a MemoryCleanerDaemon.cleanAll() function; and (i) a power down event 402-8, which occurs when the mobile electronic device 10 is about to power down.

As indicated in step 406, upon the occurrence of a trigger event, any software applications 60₁-60ₙ that are registered with the memory cleaner module 56 will be notified of the occurrence of the trigger event. In an example embodiment, as part of notification step 406, the registered applications are each passed a value that indicated the type of triggering event that has occurred. For example, a value of "0" may indicate a holstered event 402-0, a value of "1" may indicate an idle timeout event 402-1, and so on.

Method 420 includes steps taken by a registered application upon receiving notification of a triggering event. As indicated in step 422, method 420 begins when the registered application receives notification of a trigger event from the memory cleaner 56. As indicated above, the trigger event notification may include a value that identifies the type of trigger event, such that the registered application can distinguish between different triggering events and determine what objects, if any, need to be cleaned based on the type of triggering event. As indicated in step 424, the registered application unreferences any objects 164 that have been allocated to it that include data that the registered application has determined should be wiped. In an example embodiment, an object 164 is unreferenced by nulling out in reference table 160 the reference 162 to the object 164. In example embodiments, the registered application selectively unreferences objects 164 based on the type of trigger event. For example, a holstered event 402-0 may cause a particular registered application to unreference one object or set of objects allocated to it, a power down event 402-8 may cause the registered application to unreference a different object or set of objects allocated to it, and a programmatic clean event 402-7 may cause the registered application to unreference all data storing objects allocated to the registered application. As indicated in step 426, in an example embodiment, the registered application then reports to the memory cleaner 56 in the event that it has unreferenced any objects 164 - for example, the registered application may return a "true" value to the memory cleaner 56 if the registered application unreferences any objects upon receiving a trigger event notification.

Returning again to method 400, after issuing a trigger event notification to all registered applications, as indicated in step 406, the memory cleaner 56 waits to see if any of the registered applications report that they have unreferenced objects 164, and if so, the memory cleaner 56 calls on garbage collector 58 to perform a garbage collection function. In some embodiments, the memory cleaner 56 forces a garbage collection in step 408 without any regard for whether any registered applications have indicated that they have unreferenced objects 164. In some embodiments, the memory cleaner 56 may force a garbage collection upon the occurrence of selected trigger events (for example a memory cleaner event 402-4) regardless of whether any registered applications have indicated that they have unreferenced objects 164, thus ensuring that previously unreferenced objects by all applications (and not just registered applications) are cleaned.

When the memory cleaner 56 forces a garbage collection, the garbage collector 58 identifies unreferenced objects 164 in the heap 150 and calls on the native wipe function 170 to clean the unreferenced objects 164 from the heap. This may be done by setting the object data to zeros, ones or random data. Thus, memory management system 110 allows for data stored by registered applications to be cleaned upon the occurrence of predetermined trigger events, improving data security for the mobile electronic device 10. The registered applications may include selected third party applications.

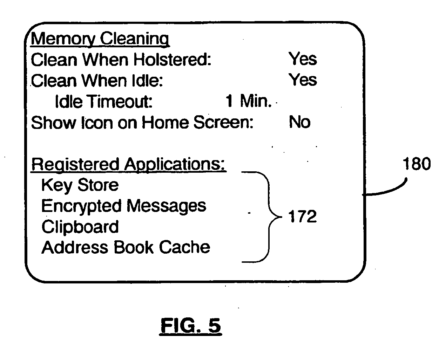

With reference to Figure 5, in an example embodiment the memory cleaner module 56 includes an application program interface and is configured to generate a user interface screen 180 on display 22 of device 10. As can be seen in Figure 5, in an example embodiment the user interface screen 180 includes a visual representation of the list 172 of registered applications. The screen 180 also displays a number of user configurable settings for the memory cleaner 56, including for example, trigger events such as "Clean When Holstered"; and Clean When Idled", which can be activated or deactivated as trigger events by the user. As indicated on screen 180, the user configurable timeout value is displayed to the user. Additionally, the user is given the option of displaying an icon linking to the memory cleaner interface on the device home screen.

The above-described embodiments of the present invention are intended to be examples only. Alterations, modifications and variations may be effected to the particular embodiments by those skilled in the art without departing from the scope of the invention, which is defined by the claims appended hereto.

## Claims

1. A data protection method for software applications on a mobile electronic device (10), the device (10) having storage (120) for allocation to respective software applications (60) for data storage, wherein a data storage cleaning operation can be triggered by any one of a plurality of types of predetermined trigger events, comprising the steps of:
creating and storing a list (172) of selected software applications (60) operating on the mobile electronic device;
waiting for an occurrence of any one of the plurality of trigger events;
notifying the selected software applications (60) of an impending storage cleaning operation upon the occurrence of one of the plurality of trigger events, comprising identifying to the selected software applications (60) the type of trigger event that has occurred; and
for each selected software application (60) receiving the notification, determining if any storage (120) allocated thereto is to be released for cleaning during the impending storage cleaning operation and if so releasing the storage (120) for cleaning, at least some of the selected software applications selectively determining if any of the storage (120) allocated thereto is to be released for cleaning in dependence on the type of trigger event identified.

2. The method of claim 1 wherein it further comprising the step of cleaning the released storage (120).

3. The method of claim 1 or claim 2 wherein the cleaning includes causing a garbage collector (58) to implement the cleaning operation.

4. The method of any one of claims 1 to 3 wherein it further comprising the step of determining if any of the selected software applications (60) have indicated that they have released storage (120) for cleaning, and if so, causing the released storage (120) to be cleaned.

5. The method of any of claims 1 to 4 wherein at least one of the trigger events is selected from the group consisting of: a holstering event that occurs when the device (10) is placed in a corresponding holster; an idle timeout event that occurs when the device (10) is left idle by a user thereof for a predetermined time period; a synchronization start event that occurs when the device (10) begins a synchronization operation with a computer; a synchronization end event that occurs when the device (10) ends the synchronization operation with the computer; a memory cleaner event that occurs when a memory cleaning operation is initiated on the device (10); a time change event that occurs when a time setting of the device (10) is changed; a device lock event that occurs when the device (10) is locked; and a power down event that occurs as the device (10) is about to power down.

6. The method of claim 1 wherein at least some of the selected software applications (60) reference objects (164) for storing data in the storage (120) of the mobile electronic device, wherein the step of creating and storing a list comprises registering the selected software applications (60); and the step of releasing the storage (120) for cleaning comprises unreferencing at least some objects (164) referenced by the selected software applications (60); the method further comprising a step of cleaning the storage (120) to remove data stored in any unreferenced objects (164).

7. The method of any of claims 1 to 6 wherein the trigger events can be pre-selected by a user of the device (10).

8. The method of claim 6 comprising, prior to the cleaning step, determining if any objects have been unreferenced by the registered applications (60), and if not, foregoing the cleaning step.

9. The method of claim 6 wherein the cleaning step comprises calling a wipe function (170) to cause either all zeros, all ones or random data to be mitten to the unreferenced objects (164).

10. A mobile electronic device (10), comprising:
a microprocessor (38);
a plurality of software applications (60) operable on the microprocessor (38);
a heap memory (150) for storing objects (164) used by the software applications (60);
a garbage collector module (58) operable on the microprocessor (38) for cleaning unreferenced objects (164) in the heap memory (150); and
a memory cleaner module (56) operable on the microprocessor (38) for maintaining a list (172) of registered applications selected from the software applications (60), and for notifying at least some of the registered applications upon the occurrence of a trigger event;
the registered applications being responsive to the memory cleaner module (56) for unreferencing objects (164) in the heap memory (150) used thereby upon receiving the notification from the memory cleaner module (56),
and wherein:
the memory cleaner module (56) is arranged to notify the registered applications upon the occurrence of any one of a plurality of different types of trigger events, the notification comprising an identification of the type of trigger event; and at least some of the registered applications are configured for, upon receiving notification from the memory cleaner module (56), selectively unreferencing objects (164) referenced thereby based on the type of trigger event.

11. The mobile electronic device (10) of claim 10 wherein at least one of the trigger events is selected from the group consisting of: a holstering event that occurs when the device (10) is placed in a corresponding holster; an idle timeout event that occurs when the device (10) is left idle by a user thereof for a predetermined time period; a synchronization start event that occurs when the device (10) begins a synchronization operation with a computer; a synchronization end event that occurs when the device (10) ends the synchronization operation with the computer; a memory cleaner event that occurs when a memory cleaning operation is initiated on the device(10); a time change event that occurs when a time setting of the device (10) is changed; a device lock event that occurs when the device is locked(10); and a power down event that occurs as the device (10) is about to power down.

12. The mobile electronic device (10) of claim 10 or claim 11 wherein the registered applications are each configured for advising the memory cleaner module (56) if any objects have been unreferenced thereby based on the notification, and the memory cleaner module (56) is configured for causing the garbage collector module (58) to clean unreferenced objects (164) in the heap memory (150) upon being advised by one or more of the registered applications that objects (164) have been unreferenced thereby based on the notification.

13. The mobile electronic device (10) of any of claims 10 to 12 wherein at least one of the software applications is configured to automatically register with the memory cleaner module (56) as a registered application when creating a predetermined category of data.

14. A machine readable medium comprising program code means executable on a microprocessor (38) of the mobile electronic device (10) of any one of claims 10 to 13 for implementing the method of any one of claims 1 to 9.

15. A wireless communications system comprising a wireless network (50) and at least one mobile electronic device (10) according to any one of claims 10 to 13.

## Patentansprüche

1. Datensicherungsverfahren für Software-Anwendungen auf einem elektronischen Mobilgerät (10), wobei das Gerät (10) über einen Speicher (120) für die Zuweisung an jeweilige Software-Anwendungen (60) für den Datenspeicher verfügt, wobei ein Datenspeicherbereinigungsvorgang von einem einer Vielzahl von Typen vorbestimmter auslösender Ereignisse ausgelöst werden kann, der folgende Schritte umfasst:
Anlegen und Speichern einer Liste (172) ausgewählter Software-Anwendungen (60), die auf dem elektronischen Mobilgerät betrieben werden;
Warten auf ein Eintreten eines der Vielzahl auslösender Ereignisse;
Benachrichtigen der ausgewählten Software-Anwendungen (60) über einen bevorstehenden Speicherbereinigungsvorgang beim Eintreten eines der Vielzahl von auslösenden Ereignissen, was das Identifizieren des Typs des auslösenden Ereignisses, das eingetreten ist, für die ausgewählten Software-Anwendungen (60) umfasst; und
für jede ausgewählte Software-Anwendung (60) Empfangen der Benachrichtigung, wobei ermittelt wird, ob ihr zugewiesener Speicher (120) zum Bereinigen während des bevorstehenden Speicherbereinigungsvorgangs freizugeben ist, und in diesem Fall Freigeben des Speichers (120) zum Bereinigen, wobei mindestens einige der ausgewählten Software-Anwendungen selektiv ermitteln, ob ihnen zugewiesener Speicher (120) in Abhängigkeit von dem Typ des identifizierten auslösenden Ereignisses zum Bereinigen freizugeben ist.

2. Verfahren nach Anspruch 1, das ferner den Schritt des Bereinigens des freigegebenen Speichers (120) umfasst.

3. Verfahren nach Anspruch 1 oder Anspruch 2, wobei das Bereinigen umfasst, dass bewirkt wird, dass ein Garbage Collector (58) den Bereinigungsvorgang durchführt.

4. Verfahren nach einem der Ansprüche 1 bis 3, das ferner den Schritt des Ermittelns umfasst, ob irgendwelche der ausgewählten Software-Anwendungen (60) darauf hingewiesen haben, dass sie Speicher (120) zum Bereinigen freigegeben haben, und in diesem Fall Bewirken, dass der freigegebene Speicher (120) bereinigt wird.

5. Verfahren nach einem der Ansprüche 1 bis 4, wobei mindestens eines der auslösenden Ereignisse aus der Gruppe ausgewählt, die aus Folgendem besteht: einem Holsterereignis, das eintritt, wenn das Gerät (10) in einem entsprechenden Holster untergebracht wird; einem Leerlauf-Timeout-Ereignis, das eintritt, wenn das Gerät (10) von einem Benutzer davon während eines vorbestimmten Zeitraums im Leerlauf gelassen wird; einem Synchronisierungsstart-Ereignis, das eintritt, wenn das Gerät (10) einen Synchronisierungsvorgang mit einem Computer anfängt; einem Synchronisierungsende-Ereignis, das eintritt, wenn das Gerät (10) den Synchronisierungsvorgang mit dem Computer beendet; einem Memory-Cleaner-Ereignis, das eintritt, wenn ein Speicherbereinigungsvorgang auf dem Gerät (10) gestartet wird; einem Zeitänderungsereignis, das eintritt, wenn eine Zeiteinstellung des Geräts (10) geändert wird; einem Gerätesperrereignis, das eintritt, wenn das Gerät (10) gesperrt wird; und einem Abschaltereignis, das eintritt, wenn das Gerät (10) gerade abgeschaltet werden soll.

6. Verfahren nach Anspruch 1, wobei mindestens einige der ausgewählten Software-Anwendungen (60) Objekte (164) zum Speichern von Daten in dem Speicher (120) des elektronischen Mobilgeräts referenzieren, wobei der Schritt des Anlegens und Speicherns einer Liste das Registrieren der ausgewählten Software-Anwendungen (60) umfasst; und der Schritt des Freigebens des Speichers (120) zum Bereinigen das Aufheben der Referenzierung mindestens einiger der von den ausgewählten Software-Anwendungen (60) referenzierten Objekte (164) umfasst; wobei das Verfahren ferner einen Schritt des Bereinigens des Speichers (120) umfasst, um in nicht referenzierten Objekten (164) gespeicherte Daten zu entfernen.

7. Verfahren nach einem der Ansprüche 1 bis 6, wobei die auslösenden Ereignisse von einem Benutzer des Geräts (10) vorausgewählt werden können.

8. Verfahren nach Anspruch 6, das vor dem Bereinigungsschritt das Ermitteln umfasst, ob die Referenzierung für irgendwelche Objekte von den registrierten Anwendungen (60) aufgehoben worden ist, und in diesem Fall Verzichten auf den Bereinigungsschritt.

9. Verfahren nach Anspruch 6, wobei der Bereinigungsschritt das Aufrufen einer Wipe-Funktion (170) umfasst, um zu bewirken, dass entweder alle Nullen, alle Einsen oder Zufallsdaten auf die nicht referenzierten Objekte (164) geschrieben werden.

10. Elektronisches Mobilgerät (10), das umfasst:
einen Mikroprozessor (38);
eine Vielzahl von auf dem Mikroprozessor (38) betriebsfähigen Software-Anwendungen (60);
einen Heap-Speicher (150) zum Speichern von von den Software-Anwendungen (60) verwendeten Objekten (164);
ein auf dem Mikroprozessor (38) betriebsfähiges Garbage-Collector-Modul (58) zum Bereinigen von nicht referenzierten Objekten (164) in dem Heap-Speicher (150); und
ein auf dem Mikroprozessor (38) betriebsfähiges Memory-Cleaner-Modul (56) zum Führen einer Liste (172) von aus den Software-Anwendungen (60) ausgewählten registrierten Anwendungen und zum Benachrichtigen mindestens einiger der registrierten Anwendungen beim Eintreten eines auslösenden Ereignisses;
wobei die registrierten Anwendungen beim Empfangen der Benachrichtigung von dem Memory-Cleaner-Modul (56) ansprechempfindlich auf das Memory-Cleaner-Modul (56) zum Aufheben der Referenzierung von Objekten (164) in dem dabei verwendeten Heap-Speicher (150) sind,
und wobei:
das Memory-Cleaner-Modul (56) angeordnet ist, um die registrierten Anwendungen beim Eintreten eines einer Vielzahl verschiedener Typen von auslösenden Ereignissen zu benachrichtigen, wobei die Benachrichtigung eine Identifizierung des Typs des auslösenden Ereignisses umfasst; und mindestens einige der registrierten Anwendungen für ein selektives Aufheben der Referenzierung von **dadurch** referenzierten Objekten (164) basierend auf dem Typ des auslösenden Ereignisses konfiguriert sind, sobald von dem Memory-Cleaner-Modul (56) eine Benachrichtigung empfangen wurde.

11. Elektronisches Mobilgerät (10) nach Anspruch 10, wobei mindestens eines der auslösenden Ereignisse aus der Gruppe ausgewählt wird, die aus Folgendem besteht:
einem Holsterereignis, das eintritt, wenn das Gerät (10) in einem entsprechenden Holster platziert wird; einem Leerlauf-Timeout-Ereignis, das eintritt, wenn das Gerät (10) von einem Benutzer davon während eines vorbestimmten Zeitraums im Leerlauf gelassen wird; einem Synchronisierungsstart-Ereignis, das eintritt, wenn das Gerät (10) einen Synchronisierungsvorgang mit einem Computer anfängt; einem Synchronisierungsende-Ereignis, das eintritt, wenn das Gerät (10) den Synchronisierungsvorgang mit dem Computer beendet; einem Memory-Cleaner-Ereignis, das eintritt, wenn ein Speicherbereinigungsvorgang auf dem Gerät (10) gestartet wird; einem Zeitänderungsereignis, das eintritt, wenn eine Zeiteinstellung des Geräts (10) geändert wird; einem Gerätesperrereignis, das eintritt, wenn das Gerät (10) gesperrt wird; und
einem Abschaltereignis, das eintritt, wenn das Gerät (10) gerade abgeschaltet werden soll.

12. Elektronisches Mobilgerät (10) nach Anspruch 10 oder Anspruch 11, wobei die registrierten Anwendungen jeweils konfiguriert sind, um dem Memory-Cleaner-Modul (56) anzuzeigen, ob die Referenzierung für irgendwelche Objekte basierend auf der Benachrichtigung **dadurch** aufgehoben worden ist, und das Memory-Cleaner-Modul (56) konfiguriert ist, um zu bewirken, dass das Garbage-Collector-Modul (58) nicht referenzierte Objekte (164) in dem Heap-Speicher (150) bereinigt, sobald ihm von einem oder mehreren der registrierten Anwendungen angezeigt wurde, dass die Referenzierung für Objekte (164) basierend auf der Benachrichtigung **dadurch** aufgehoben worden ist.

13. Elektronisches Mobilgerät (10) nach einem der Ansprüche 10 bis 12, wobei mindestens eine der Software-Anwendungen konfiguriert ist, um beim Anlegen einer vorbestimmten Datenkategorie automatisch als eine registrierte Anwendung in dem Memory-Cleaner-Modul (56) registriert zu werden.

14. Maschinenlesbares Medium, das Programmcodemittel umfasst, die auf einem Mikroprozessor (38) des elektronischen Mobilgeräts (10) nach einem der Ansprüche 10 bis 13 ausführbar sind, um das Verfahren nach einem der Ansprüche 1 bis 9 durchzuführen.

15. Drahtloses Kommunikationssystem, das ein drahtloses Netzwerk (50) und mindestens ein elektronisches Mobilgerät (10) nach einem der Ansprüche 10 bis 13 umfasst.

## Revendications

1. Un procédé de protection de données destiné à des applications logicielles sur un dispositif électronique mobile (10), le dispositif (10) possédant un espace mémoire (120) destiné à être attribué aux applications logicielles respectives (60) pour la conservation de données, où une opération de nettoyage de l'espace mémoire de données peut être déclenchée par l'un quelconque d'une pluralité de types d'événements déclencheurs prédéterminés comprenant les opérations suivantes :
la création et la mise en mémoire d'une liste (172) d'applications logicielles sélectionnées (60) fonctionnant sur le dispositif électronique mobile,
l'attente de la survenue de l'un quelconque des événements de la pluralité d'événements déclencheurs,
la notification des applications logicielles sélectionnées (60) d'une opération imminente de nettoyage de l'espace mémoire après la survenue de l'un quelconque des événements de la pluralité d'événements déclencheurs, comprenant l'identification auprès des applications logicielles sélectionnées (60) du type d'événement déclencheur qui s'est produit, et
pour chaque application logicielle sélectionnée (60), la réception de la notification, la détermination si un espace mémoire (120) attribué à celle-ci doit être libéré pour nettoyage au cours de l'opération imminente de nettoyage de l'espace mémoire et, dans l'affirmative, la libération de l'espace mémoire (120) pour nettoyage, au moins certaines des applications logicielles sélectionnées déterminant de manière sélective si une partie quelconque de l'espace mémoire (120) attribuée à celles-ci doit être libérée pour nettoyage selon le type d'événement déclencheur identifié.

2. Le procédé selon la Revendication 1 comprenant en outre l'opération de nettoyage de l'espace mémoire libéré (120).

3. Le procédé selon la Revendication 1 ou 2 où l'opération de nettoyage comprend le fait d'amener un ramasse-miettes (58) à mettre en oeuvre l'opération de nettoyage.

4. Le procédé selon l'une quelconque des Revendications 1 à 3 comprenant en outre l'opération de détermination si certaines des applications logicielles sélectionnées (60) ont indiqué qu'elles ont libéré de l'espace mémoire (120) pour nettoyage et, dans l'affirmative, le fait d'amener l'espace mémoire libéré (120) à être nettoyé.

5. Le procédé selon l'une quelconque des Revendications 1 à 4, où au moins un des événements déclencheurs est sélectionné dans le groupe se composant de : un événement de mise sous étui qui se produit lorsque le dispositif (10) est placé dans un étui correspondant, un événement de mise au repos qui se produit lorsque le dispositif (10) est mis au repos par un utilisateur de celui-ci pendant une période de temps prédéterminée, un événement de début de synchronisation qui se produit lorsque le dispositif (10) débute une opération de synchronisation avec un ordinateur, un événement de fin de synchronisation qui se produit lorsque le dispositif (10) termine l'opération de synchronisation avec l'ordinateur, un événement de nettoyage de mémoire qui se produit lorsque une opération de nettoyage de mémoire est lancée sur le dispositif (10), un événement de changement d'heure qui se produit lorsque un paramètre temporel du dispositif (10) est modifié, un événement de verrouillage du dispositif qui se produit lorsque le dispositif (10) est verrouillé, et un événement de mise hors tension qui se produit lorsque le dispositif (10) est sur le point d'être mis hors tension.

6. Le procédé selon la Revendication 1 où au moins certaines des applications logicielles sélectionnées (60) référencent des objets (164) destinés à mettre en mémoire des données dans l'espace mémoire (120) du dispositif électronique mobile, où l'opération de création et de mise en mémoire d'une liste comprend l'enregistrement des applications logicielles sélectionnées (60), et l'opération de libération de l'espace mémoire (120) pour nettoyage comprend le déréférençage d'au moins certains objets (164) référencés par les applications logicielles sélectionnées (60), le procédé comprenant en outre une opération de nettoyage de l'espace mémoire (120) de façon à retirer les données conservées en mémoire dans tout objet déréférencé (164).

7. Le procédé selon l'une quelconque des Revendications 1 à 6 où les événements déclencheurs peuvent être présélectionnés par un utilisateur du dispositif (10).

8. Le procédé selon la Revendication 6, comprenant, avant l'opération de nettoyage, la détermination si certains objets ont été déréférencés par les applications enregistrées (60) et, dans la négative, l'abandon de l'opération de nettoyage.

9. Le procédé selon la Revendication 6, où l'opération de nettoyage comprend l'appel d'une fonction de purge (170) destinée à amener soit tous les zéros, tous les uns ou des données aléatoires à être écrits dans les objets déréférencés (164).

10. Un dispositif électronique mobile (10), comprenant :
un microprocesseur (38),
une pluralité d'applications logicielles (60) utilisables sur le microprocesseur (38),
une mémoire de type tas (150) destinée à conserver en mémoire des objets (164) utilisés par les applications logicielles (60),
un module ramasse-miettes (58) utilisable sur le microprocesseur (38) pour nettoyer des objets déréférencés (164) de la mémoire de type tas (150), et
un module nettoyeur de mémoire (56) utilisable sur le microprocesseur (38) pour entretenir une liste (172) d'applications enregistrées sélectionnées parmi les applications logicielles (60), et pour notifier au moins certaines des applications enregistrées après la survenue d'un événement déclencheur,
les applications enregistrées réagissant au module nettoyeur de mémoire (56) de façon à déréférencer des objets (164) de la mémoire de type tas (150) utilisés par celle-ci après réception de la notification provenant du module nettoyeur de mémoire (56),
et où :
le module nettoyeur de mémoire (56) est agencé de façon à notifier les applications enregistrées après la survenue de l'un quelconque des types de la pluralité de types différents d'événements déclencheurs, la notification comprenant une identification du type d'événement déclencheur, et au moins certaines des applications enregistrées sont configurées pour, après la réception de la notification provenant du module nettoyeur de mémoire (56), déréférencer de manière sélective des objets (164) référencés par celles-ci en fonction du type d'événement déclencheur.

11. Le dispositif électronique mobile (10) selon la Revendication 10 où au moins un des événements déclencheurs est sélectionné dans le groupe se composant de : un événement de mise sous étui qui se produit lorsque le dispositif (10) est placé dans un étui correspondant, un événement de mise au repos qui se produit lorsque le dispositif (10) est mis au repos par un utilisateur de celui-ci pendant une période de temps prédéterminée, un événement de début de synchronisation qui se produit lorsque le dispositif (10) débute une opération de synchronisation avec un ordinateur, un événement de fin de synchronisation qui se produit lorsque le dispositif (10) termine l'opération de synchronisation avec l'ordinateur, un événement de nettoyage de mémoire qui se produit lorsque une opération de nettoyage de mémoire est lancée sur le dispositif (10), un événement de changement d'heure qui se produit lorsque un paramètre temporel du dispositif (10) est modifié, un événement de verrouillage du dispositif qui se produit lorsque le dispositif (10) est verrouillé, et un événement de mise hors tension qui se produit lorsque le dispositif (10) est sur le point d'être mis hors tension.

12. Le dispositif électronique mobile (10) selon la Revendication 10 ou 11 où les applications enregistrées sont chacune configurées de façon à alerter le module nettoyeur de mémoire (56) si certains objets ont été déréférencés par celles-ci en fonction de la notification, et le module nettoyeur de mémoire (56) est configuré de façon à amener le module ramasse-miettes (58) à nettoyer des objets déréférencés (164) de la mémoire de type tas (150) après avoir été alerté par une ou plusieurs des applications enregistrées que des objets (164) ont été déréférencés par celles-ci en fonction de la notification.

13. Le dispositif électronique mobile (10) selon l'une quelconque des Revendications 10 à 12, où au moins une des applications logicielles est configurée de façon à s'enregistrer automatiquement auprès du module nettoyeur de mémoire (56) en tant qu'application enregistrée lors de la création d'une catégorie de données prédéterminée.

14. Un support lisible par ordinateur comprenant du code de programme exécutable sur un microprocesseur (38) du dispositif électronique mobile (10) selon l'une quelconque des Revendications 10 à 13 destiné à mettre en oeuvre le procédé selon l'une quelconque des Revendications 1 à 9.

15. Un système de communication sans fil comprenant un réseau sans fil (50) et au moins un dispositif électronique mobile (10) selon l'une quelconque des Revendications 10 à 13.
